# EUROPÄISCHE PATENTSCHRIFT

(11) **EP 3 145 040 B1**
(45) Veröffentlichungstag und Bekanntmachung des Hinweises auf die Patenterteilung: **06.03.2019**
(21) Anmeldenummer: 16188923.3
(22) Anmeldetag: 15.09.2016
(51) Int. Cl.: H02G 3/22, B60R 16/02

(54) **LEITUNGSSATZ MIT EINER VERBINDUNGSSTELLE**
CABLES WITH A CONNECTION POINT
CÂBLES COMPRENANT UN POINT DE CONNEXION

(30) Priorität: 18.09.2015 DE 102015218006
(43) Veröffentlichungstag der Anmeldung: 22.03.2017
(73) Patentinhaber: Hirschmann Automotive GmbH, 6830 Rankweil-Brederis (AT)
(72) Erfinder: Häfele, Jürgen, 6800 Feldkirch (AT); Siegl, Crispin, 6571 Strengen (AT)
(74) Vertreter: Greif, Thomas

(56) Entgegenhaltungen:
- EP-A1- 1 098 086
- EP-A1- 2 763 242
- EP-A2- 1 032 082
- EP-A2- 1 699 116
- WO-A1-2011/005070
- DE-U1- 9 410 070
- US-A- 4 492 421

## Beschreibung

Die Erfindung betrifft einen Leitungssatz mit einer Verbindungsstelle nach dem Oberbegriff des Anspruchs 1, wie aus der EP2763242A bekannt. Heutzutage ist es bei automotiven Anwendungen erforderlich, Sensoren, Aktuatoren, Steuereinheiten oder dergleichen mit anderen Einheiten (wie z. B. ebenfalls Steuereinheiten) zu verbinden. Im einfachsten Fall soll mit einem Sensor ein Betriebsparameter eines Fahrzeuges aufgenommen werden, der über Kabel an eine Steuereinheit angeschlossen ist, wobei die aufgenommenen Betriebsparameter mittels des Kabels übertragen werden.
Hierzu ist es schon bekannt geworden, Leitungssätze zur Verfügung zu stellen, bei der die eine Einheit (wie z. B. Sensor, Aktor oder dergleichen) über ein Kabel an einer Steuereinheit angeschlossen ist. Dabei sind diese Einheiten oftmals in Bereichen angeordnet, in denen deutlich andere Umgebungsbedingungen herrschen, als wie im übrigen Fahrzeug. Beispielhaft sei hier auf einen Öldruck- oder Öltemperatursensor in einem Getriebegehäuse oder in einer Ölwanne eines Fahrzeuges hingewiesen, bei denen im Betrieb des Fahrzeuges hohe Drücke und/oder wesentliche höhere Temperaturen herrschen als in der übrigen Umgebung, in der sich das Fahrzeug befindet. Daher ist es erforderlich, eine Verbindungsstelle bereitzustellen, mit der der Leitungssatz zwischen der einen Einheit und der Steuereinheit beispielsweise durch ein Gehäuse durchgeführt werden kann, wobei die Stelle der Durchführung die Trennung ist zwischen den beiden deutlich voneinander abweichenden Umgebungsparametern. Hierbei ist es unbedingt erforderlich, im Bereich dieser Trennebene (zum Beispiel zwischen dem Inneren eines Getriebegehäuses eines Fahrzeuges und dem Außenbereich um das Getriebegehäuse herum) eine Dichtheit herzustellen, um zu vermeiden, dass sich die beiden voneinander abweichenden Umgebungsbedingungen (im Inneren heißes Getriebeöl, außen kühlere Umgebungsluft) vermischen. So muss bei der Anordnung eines Sensors in einem Getriebegehäuse sichergestellt werden, dass kein Getriebeöl aus dem Getriebegehäuse ausdringt, wobei aber gleichzeitig der Leitungssatz von dem Inneren des Getriebegehäuses nach außen durchgeführt werden muss. Hier kommt es insgesamt auf eine Dichtheit, insbesondere aber auch auf eine Längsdichtheit im Verlauf der durchgeführten Kabel an. Dabei stellt es eine sehr große Herausforderung dar, diese Verbindungsstelle nicht nur dicht, sondern dauerhaft dicht bei wechselnden Betriebsbedingungen (wechselnde Temperaturen, aber auch Vibrationen und dergleichen) zu gestalten.
Die Erfindung liegt die Aufgabe zugrunde, einen Leitungssatz mit einer Verbindungsstelle zur Durchführung durch ein Gehäuse bereitzustellen, mit dem die vorstehend geschilderten Anforderungen erfüllt werden.

Diese Aufgabe ist gelöst durch einen Leitungssatz mit einer Verbindungsstelle mit den Merkmalen des Anspruchs 1, geeignet und ausgebildet, um zumindest zwei elektrische Leiter miteinander zu verbinden und durch eine Trennebene zu führen, wobei auf beiden Seiten der Trennebene voneinander unterschiedliche Umgebungsbedingungen herrschen, wobei an einem Ende eines elektrischen Leiters ein Verbinderteil angeordnet und ein Kontaktträger vorgesehen ist, der zumindest das eine Verbinderteil aufnimmt, wobei der weitere elektrische Leiter mit dem Verbinderteil kontaktiert ist. Der Einsatz des Kontaktträgers hat den Vorteil, dass er den geometrischen Gegebenheiten der Öffnung in dem Gehäuse, durch das die elektrischen Leiter durchgeführt werden sollen, genau angepasst werden kann. Das bedeutet, dass er hinsichtlich seiner äußeren Geometrien genau der Öffnung in dem Gehäuse angepasst wird, um ihn dort nicht nur anzuordnen, sondern auch dauerhaft in seiner Lage und vor allen Dingen dichtend zu fixieren. Damit gewährleistet der Kontaktträger zum einen die Abdichtung gegenüber dem Gehäuse, durch das die elektrischen Leiter, genauer ein Kabel mit elektrischen Leitern, durchgeführt werden soll. Zum anderen wird mit ihm aber auch eine Schnittstelle realisiert, um die elektrischen Leiter bzw. die Kabel, die durch ihn durchgeführt werden sollen, auf beiden Seiten der Trennebene den jeweiligen Anforderungen ausbilden zu können. So ist es insbesondere nicht erforderlich, außerhalb des Gehäuses ein hochtemperaturfestes Kabel zu verwenden, wobei dies innerhalb des Gehäuses unbedingt erforderlich ist. Somit bildet der Kontaktträger eine Aufnahme für zumindest ein Verbinderteil, welches dazu geeignet und ausgebildet ist, um die zumindest zwei elektrischen Leiter (der zumindest eine elektrische Leiter außerhalb des Gehäuses und der zumindest eine elektrische Leiter innerhalb des Gehäuses) miteinander zu verbinden.
Zur Realisierung des Kontaktträgers sind zwei Möglichkeiten denkbar. Zum einen kann das Verbinderteil mit den beiden zu verbindenden elektrischen Leitern kontaktiert werden und anschließend der Kontaktträger als Umspritzung (Spritzgussteil, Gießteil oder dergleichen) realisiert werden. Diese Variante wird weiter im Folgenden noch beschrieben.

In Weiterbildung der Erfindung ist der Kontaktträger dichtend in die Trennstelle eingesetzt. Zur Realisierung der Abdichtung des Kontaktträgers gegenüber der Öffnung in dem Gehäuse, die die Trennstelle bildet, kommt einerseits in Betracht, dass der Kontaktträger formschlüssig in die Öffnung eingesetzt wird. Das bedeutet, dass die äußere Geometrie des Kontaktträgers geringfügig größer ist als die innere Geometrie der Öffnung, sodass die Abdichtung durch Formschluss, zum Beispiels mittels Einpressen des Kontaktträgers, erfolgt. Ergänzend oder alternativ dazu ist es denkbar, zur Abdichtung ein Dichtelement zu verwenden. Dieses Dichtelement ist fester Bestandteil des Kontaktträgers. Im letztgenannten Fall kommt beispielsweise die Herstellung des Kontaktträgers in einem ZweiKomponenten-Gieß- oder Spritzgussverfahren in Betracht, wobei zwei Materialien verwendet werden. Der Grundkörper des Kontaktträgers wird aus einem vergleichsweise harten Material hergestellt und die Bereiche des Kontaktträgers, die die Dichtfunktion übernehmen sollen, werden aus einem dem gegenüber vergleichsweise weichen Material hergestellt.
In Weiterbildung der Erfindung ist der elektrische Leiter dichtend in den Kontaktträger eingesetzt. Dies wird entweder dadurch realisiert, dass der zumindest eine elektrische Leiter, der mit dem Verbinderteil verbunden ist, umspritzt wird, wobei die Umspritzung den Kontaktträger bildet. Vorzugsweise werden mehrere elektrische Leiter in einem Umspritzvorgang zur Ausbildung des gemeinsamen Kontaktträgers umspritzt. Vorzugsweise handelt es sich bei dem zumindest einen elektrischen Leiter um denjenigen Leiter, der ausgehend von der Trennebene in Richtung des Inneren des Gehäuses ausgerichtet ist.

In Weiterbildung der Erfindung ist zumindest der Kontaktbereich, in dem der weitere elektrische Leiter mit dem Verbinderteil kontaktiert ist, mit einer Umspritzung versehen. Diese Umspritzung schließt sich dem Kontaktträger an, vorzugsweise in diejenige Richtung aus dem Gehäuse mit der Trennebene heraus. Das bedeutet, dass in einer bevorzugten Ausführungsform diese Umspritzung vollständig außerhalb des Gehäuses angeordnet ist. Es kann aber auch daran gedacht werden, dass diese Umspritzung nicht nur an einer Stirnfläche des Kontaktträgers zur Anlage kommt, insbesondere dichtend, sondern dass sie auch einen Endbereich des Kontaktträgers, der aus der Trennebene heraus nach außen weist, umschließt. Die Umspritzung kann als weitere Umspritzung realisiert werden, wenn der Kontaktträger entweder als eigenständiges Bauteil vorher in einem Spritzgussverfahren hergestellt worden ist oder wenn das zumindest eine Verbinderteil mit dem daran angeordneten elektrischen Leiter umspritzt wurde. Diese weitere Umspritzung fasst die nach außen geführten elektrischen Leiter zusammen und schützt den Kontaktbereich des zumindest einen Verbinderteiles, an dem der weitere (nach außen geführte) weitere elektrische Leiter angeordnet und elektrisch kontaktiert ist. Vorzugsweise ist diese weitere Umspritzung vollständig außerhalb des Gehäuses angeordnet und grenzt lediglich an die Trennebene, wobei aber auch alternativ daran gedacht werden kann, diese weitere Umspritzung in einen Teilbereich der Öffnung anzuordnen.

In Weiterbildung der Erfindung weist die weitere Umspritzung zumindest einen Rasthaken, einen Verriegelungsclip oder dergleichen auf. Mit diesem zumindest einen Rasthaken wird die fertige Verbindungsstelle dem Bereich der Öffnung vorzugsweise in der Trennebene festgelegt, sodass durch vermieden wird, dass die Verbindungsstelle sich in das Innere des Gehäuses bewegen kann.

Alternativ oder ergänzend dazu ist in Weiterbildung der Erfindung vorgesehen, dass der Kontaktträger zumindest einen Rasthaken aufweist, mit dem er die Trennebene zwecks seiner Festlegung hintergreift. Der zumindest eine Rasthaken, vorzugsweise zwei sich gegenüberliegende Rasthaken, hintergreift eine korrespondierende Geometrie um die Öffnung in dem Gehäuse herum, und zwar hinter der Trennebene. Dadurch wird der Kontaktträger in seiner Lage in der Öffnung des Gehäuses festgelegt. Der zumindest eine Rasthaken der weiteren Umspritzung kann dabei verhindern, dass dann, wenn der Kontaktträger mit seinem zumindest einen Rasthaken in die Öffnung in dem Gehäuse eingeführt wird, dass dann der Kontraktträger zu weit in das Innere des Gehäuses durchgedrückt wird. Denn bevor dies erfolgen kann, kommt der zumindest eine Rasthaken der weiteren Umspritzung an einer Stirnfläche um die Öffnung im Bereich der Trennebene herum zur Anlage. Somit ist der zumindest eine Rasthaken der weiteren Umspritzung auch ein optischer Indikator, dass die Verbindungsstelle korrekt montiert wurde.
In Weiterbildung der Erfindung weist das Verbinderteil einen Vorsprung zwecks seiner Festlegung an dem Kontraktträger auf. Das Verbinderteil ist beispielsweise ein Stanzteil, welches an seinen beiden Enden Kontaktbereiche für die Festlegung und Kontaktierung der miteinander zu verbindenden elektrischen Leiter aufweist. Vorzugsweise ist das eine Ende des Verbinderteiles für die Crimp-Kontaktierung ausgebildet, wohingegen das andere Ende lanzenartig ausgebildet ist, um dort das Ende des zugehörigen elektrischen Leiters anlöten, anschweißen oder dergleichen zu können. Ebenso vorzugsweise zwischen diesen beiden Kontaktbereichen ist der Vorsprung, zum Beispiel als federnde Lasche, ausgebildet, der dann eine entsprechende Geometrie innerhalb der Kontaktkammer des Kontaktträgers (wenn er als eigenständiges Bauteil ausgebildet ist) hintergreift. Durch diesen Vorsprung wird es also ermöglicht, dass das Verbinderteil in seine zugehörige Kontaktkammer in den Kontaktträger eingesetzt werden kann und in seiner Lage fixiert wird, wenn es seine Endposition erreicht hat. Für den Fall, dass der Kontaktträger als Umspritzung ausgebildet ist, kann ein solcher Vorsprung ebenfalls vorhanden sein, muss es aber nicht. Ist im Falle der Umspritzung zur Ausgestaltung des Kontaktträgers der Vorsprung des Verbinderteiles vorhanden, bewirkt er in vorteilhafter Weise, dass das Verbinderteil innerhalb der Umspritzung nicht verdreht werden kann.

Die Erfindung stellt also als eine mögliche Lösung einen Leitungssatz bereit, der eine Verbindungsstelle zur Durchführung durch ein Gehäuse aufweist, bei dem im Bereich der Verbindungsstelle zwei Umspritzungen vorgesehen sind, wobei aus der einen Umspritzung ein erstes Kabel und ein zweites Kabel aus der zweiten Umspritzung herausgeführt ist, wobei das eine Kabel innerhalb des Gehäuses und das zweite Kabel außerhalb des Gehäuses angeordnet ist und ein jeder elektrischer Leiter eines Kabels im Bereich der Verbindungsstelle über ein Verbinderteil miteinander verbunden und damit elektrisch kontaktiert ist.

Aufgrund der beiden Umspritzungen kann sichergestellt werden, dass das Material einer jeden Umspritzung auf das Material des Außenmantels des Kabels optimal angepasst werden kann, wobei jedes Kabel den Anforderungen innerhalb oder außerhalb des Gehäuses ebenfalls hinsichtlich seiner Materialwahl, insbesondere des Außenmantels angepasst werden kann. So muss beispielsweise das Kabel, insbesondere der Außenmantel, welches innerhalb des Gehäuses angeordnet ist und hohen Temperaturen unterliegt, andere Anforderungen (insbesondere Temperaturbeständigkeit) erfüllen als dasjenige Kabel, welches außerhalb des Gehäuses angeordnet ist.

Die beiden Umspritzungen haben außerdem den Vorteil, dass ihnen diejenige Geometrie, insbesondere eine äußere Geometrie, beim Umspritzvorgang gegeben werden kann, die auf den jeweiligen Einbauort angepasst ist. So kann beispielsweise mit der einen Umspritzung, die innerhalb des Gehäuses angeordnet wird, sichergestellt werden, dass die Verbindungsstelle sicher und dauerhaft an dem Gehäuse, insbesondere dessen Durchtrittsöffnung für die Verbindungsstelle, festgelegt werden kann.

Mit der anderen außerhalb des Gehäuses angeordneten Umspritzung kann z. B. eine Zugentlastung, eine Abwinklung (dass heißt Kabelführung) oder dergleichen realisiert werden.

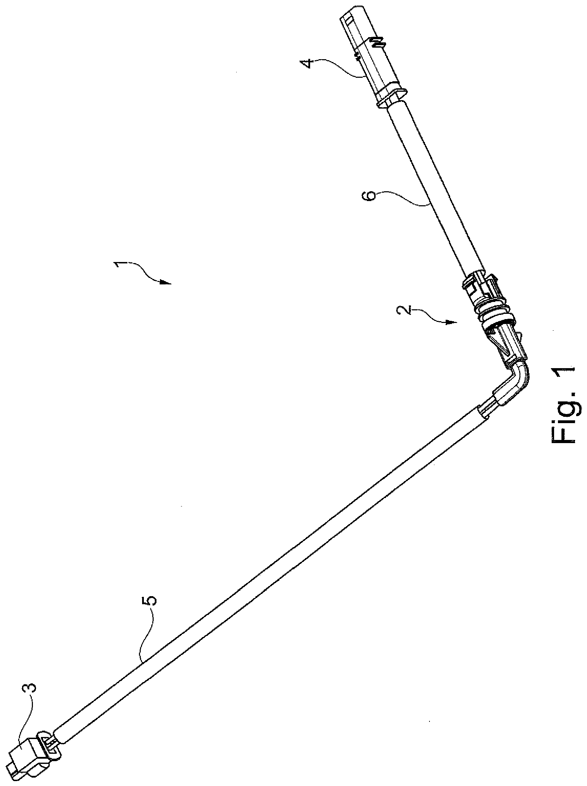

Ein Ausführungsbeispiel ist in den Figuren 1 bis 8 gezeigt, wobei aus diesen auch die einzelnen Schritte der Herstellung eines solchen Leitungssatzes hervorgehen.

Mit der Bezugsziffer 1 ist ein Leitungssatz bezeichnet, der eine Verbindungsstelle 2 aufweist. An dem jeweiligen Ende des Leitungssatzes 1 ist ein Steckverbinder 3, 4 angeordnet, wobei dies nur beispielhaft ist und die Enden des Kabels für die weitere Konfektionierung frei bleiben können oder auch z. B, direkt an eine Platine eines Steuergerätes angelötet werden.

Ausgehend von der Verbindungsstelle 2 ist ein erstes Kabel 5 in Richtung des Steckverbinders 3 und ein weiteres Kabel 6 in Richtung des Steckverbinders 4 angeordnet.

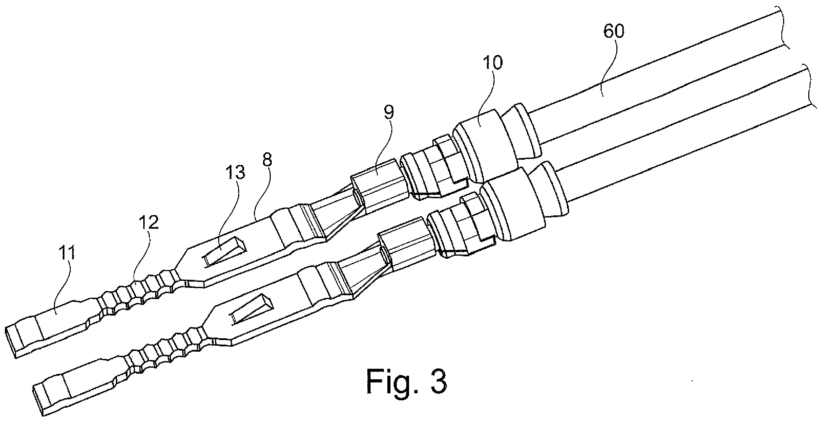

Bezüglich der Herstellung und des Aufbaus der Verbindungsstelle 2 wird auf die Figuren 3 bis 8 verwiesen.

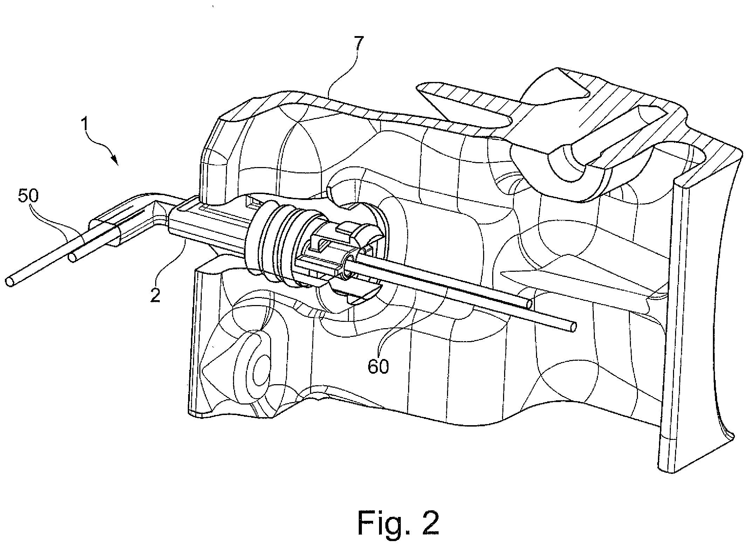

Figur 2 zeigt die beispielhafte Anordnung der Verbindungsstelle 2 in einem Gehäuse 7, beispielsweise in einem Getriebegehäuse oder dergleichen. Mittels der Verbindungsstelle 2 ist der Leitungssatz 1 durch eine entsprechend gestaltete Öffnung in dem Gehäuse 7 durchgeführt, wobei das Kabel 5 (hier dargestellt mit zwei elektrischen Leitern 50, nur beispielhaft) außerhalb und das Kabel 6, hier ebenfalls beispielhaft mit zwei elektrischen Leitern 60 dargestellt, innerhalb des Gehäuses 7 angeordnet ist. Außerhalb des Gehäuses 7 herrschen normale Umgebungsbedingungen (z. B. übliche Außentemperatur) und innerhalb des Gehäuses 7 deutlich davon abweichende Umgebungsbedingungen (insbesondere deutliche höhere Temperatur, höherer Druck oder dergleichen).

In den Figuren 3 bis 8 ist die Herstellung und der Aufbau der Verbindungsstelle 2 im Detail beschrieben.

Figur 3 zeigt ein Verbinderteil 8, welches beispielsweise in einem Stanzverfahren hergestellt werden kann. Das Verbinderteil 8 weist eine Crimpbereich 9 auf, mit dem der elektrische Leiter 60 mechanisch festgelegt und elektrisch kontaktiert wird. Mit Hilfe des Crimpbereiches 9 und/oder separat davon erfolgt eine Abdichtung 10, insbesondere eine Einzelleiterabdichtung durch ein entsprechendes Dichtelement. Weiterhin weist das Verbinderteil 8 einen Kontaktbereich 11, einen Zugentlastungsbereich 12 sowie einen Vorsprung 13 auf. In Figur 3 sind zwei Verbinderteile 8 nebeneinander dargestellt, weil bei diesem Ausführungsbeispiel die Kabel 5, 6 auch jeweils zwei elektrische Leiter 50, 60 aufweisen. Es ist aber auch denkbar, dass auch nur ein elektrischer Leiter oder mehr als zwei elektrische Leiter vorhanden sind.

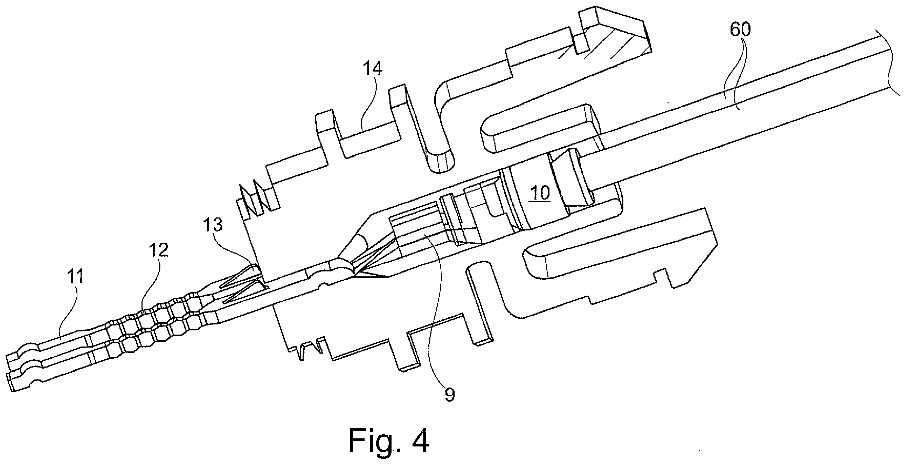

Nachdem der elektrische Leiter 60 an dem Verbinderteil 8 mechanisch befestigt und mittels Crimpvorgang elektrisch kontaktiert worden ist, erfolgt gemäß Figur 4 um den Crimpbereich 9 herum eine erste Umspritzung. Dazu wird das entsprechend Figur 3 vorbereitete Verbinderteil in eine Spritzform eingelegt und mit einem geeigneten Kunststoffmaterial umspritzt. Hierbei ist es wichtig, dass das Material für diese Umspritzung 14 so gewählt ist, dass es einerseits den Umgebungsbedingungen (innerhalb des Gehäuses 7 hohe Temperaturen, außerhalb des Gehäuses 7 deutlich niedrigere Temperaturen) und den damit verbundenen Temperaturschwankungen Stand hält und gleichzeitig auch eine wirksame Abdichtung auf das Verbinderteil 8 und den Außenmantel der elektrischen Leiter 60 (bzw. den Außenmantel des Kabels 6) realisiert. Der Vorsprung 13 des Verbinderteiles 8 bildet dabei eine Begrenzungskante für das Spritzgusswerkzeug, so dass die erste Umspritzung 14 lagerichtig auf dem Verbinderteil 8 und den abgehenden elektrischen Leitern 60 durch den Kunststoffspritzgussvorgang angeordnet wird. Anstelle der gerade beschriebenen Umspritzung kann das Aufnahmeteil für die Verbinderteile 8, die über die Crimpbereiche 9 an dem Ende des elektrischen Leiters 60 angeordnet sind und Abdichtungen 10 (Einzelleiterabdichtungen) aufweisen, auch als eigenständiger Kontaktträger ausgebildet sein.

Während also bis hierhin beschrieben ist und im folgenden noch beschrieben wird, dass das zumindest eine Verbinderteil 8 von der Umspritzung 14 umgeben ist, kann anstelle dessen das Gebilde, was in den Figuren als Umspritzung 14 dargestellt ist, auch ein fertiges eigenständiges Bauteil sein, das in diesem Fall als Kontaktträger zu bezeichnen ist. Dieser Kontaktträger weist in entsprechender Anzahl der Verbinderteile 8 (dargestellt sind zwei Verbinderteile 8, es können aber auch mehr oder weniger Verbinderteile 8 sein) durchgehende Kontaktkammern zur Aufnahme und Festlegung eines jeden Verbinderteiles 8 auf. Ist der Kontaktträger ein fertiges eigenständiges Bauteil, kann er ebenfalls in einem Gieß- oder Spritzgußverfahren hergestellt sein.

Figur 5 zeigt noch einmal das vorbereitete Verbinderteil 8 mit den schon verbundenen elektrischen Leitern 60, wobei die elektrischen Leiter 50 noch nicht im Kontaktbereich 11 angeordnet sind.

Figur 6 zeigt das gemäß Figuren 4 und 5 vorbereitete Verbinderteil 8 mit der ersten Umspritzung 14 (bzw. dem eigenständigen Kontaktträger), wobei jetzt im Kontaktbereich 11 ein jeder elektrischer Leiter 50 des Kabels 5 angeordnet, dass heißt mechanisch festgelegt und elektrisch kontaktiert ist. Dies erfolgt in an sich bekannter Weise z. B. verlöten, verschweißen, vercrimpen, verpressen oder dergleichen.

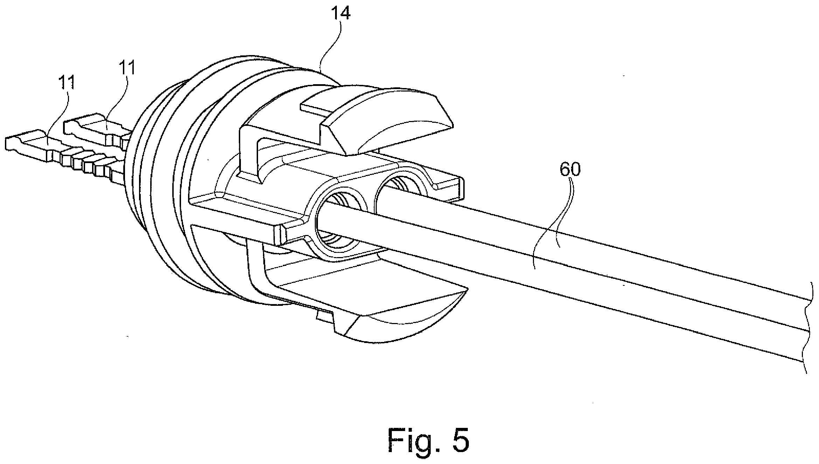

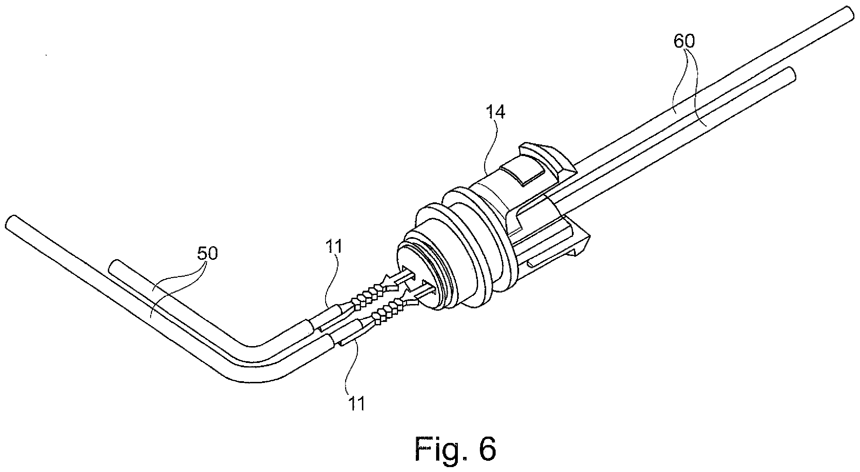

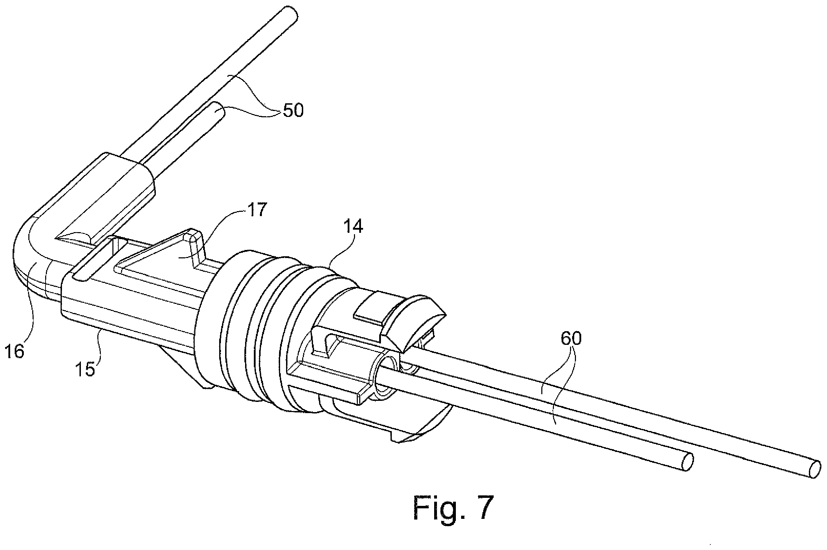

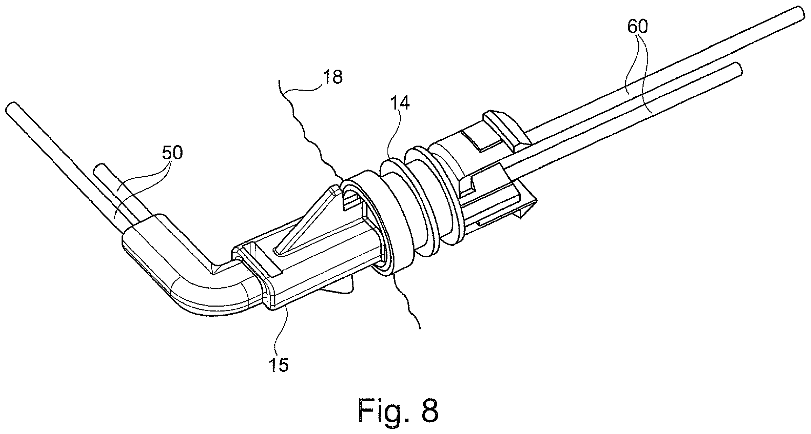

Nach diesem Herstellungsschritt erfolgt entsprechend Figur 7 die Anbringung einer zweiten Umspritzung 15. Hierzu wird das gemäß Figur 6 vorbereitete Element ebenfalls in eine entsprechend gestaltete Spritzgussform eingelegt und zur Bildung der zweiten Umspritzung 15 mit Kunststoffmaterial ausgefüllt. Dabei reicht die zweite Umspritzung 15 nur bis an eine Stirnfläche des eigenständigen Kontaktträgers (wie dargestellt) oder an die Umspritzung 14 heran oder umschließt deren endseitigen Bereich teilweise. Hierbei ist es, genauso wie bezüglich der ersten Umspritzung 14, wichtig, dass die zweite Umspritzung 15 aus einem Material besteht, welches den Umgebungsbedingungen (außerhalb des Gehäuses 7) und den Materialeigenschaften des Außenmantels des Kabels 5 bzw. der elektrischen Leiter 50 angepasst ist. Außerdem ist es wichtig, dass in dem Bereich, in dem die erste und die zweite Umspritzung 14, 15 einander stoßen, ebenfalls Dichtheit hergestellt ist. Alternativ ist es denkbar, dass diese beiden Bereiche der Umspritzungen 14, 15 nicht einander stoßen, sondern eine Lücke bestehen bleibt.
Die zweite Umspritzung 15 ist in diesem Ausführungsbeispiel mit einer Abwinklung 16 versehen, um eine rechtwinklige Führung der elektrischen Leiter 50 zu realisieren. Es kann auch daran gedacht werden, die elektrischen Leiter 50 gerade (dass heißt ohne Abwinklung) aus der zweiten Umspritzung 15 herauszuführen oder eine andere Abwinklung (abweichend von 90 Grad) einzustellen. Außerdem kann, muss aber nicht, die zweite Umspritzung 15 zumindest eine Rasthaken 17 aufweisen, mittels dessen die nunmehr fertige Verbindungsstelle 2 durch korrespondierende Rastmittel an dem Gehäuse 7 festgelegt wird oder durch die die Lage der Verbindungsstelle 2 in dem Gehäuse 7 definiert wird (Anschlag).
Ebenso wie in Figur 7 ist in Figur 8 die fertige Verbindungsstelle 2 noch einmal dargestellt, die einsatzbereit und in die Durchtrittsöffnung in dem Gehäuse 7 eingebaut werden kann. Mit 18 ist schließlich eine Trennebene gezeigt, in der die beiden Umgebungsbereiche im Bereich der Durchtrittsöffnung in dem Gehäuse 7 voneinander getrennt sind. In diesem Fall liegt die Trennebene 18 genau in dem Bereich, in dem die beiden Umspritzungen 14, 15 aneinander stoßen, wobei die Trennebene 18 aber auch im axialen Verlauf der ersten Umspritzung 14 oder im axialen Verlaufen der zweiten Umspritzung 15 liegen kann.
Damit der Kontaktträger 14 in dem Gehäuse 7 angeordnet und befestigt werden kann, weist er zumindest einen Rasthaken 19, vorzugsweise zwei gegenüberliegende Rasthaken 19 auf (siehe Figuren 4 und 5), die mit einer Anschlagfläche 20 in dem Gehäuse 7 zusammenwirken (siehe Figur 2).

### Bezugszeichenliste

- 1 .: Leitungssatz
- 2.: Verbindungsstelle
- 3.: Steckverbinder
- 4.: Steckverbinder
- 5.: Erstes Kabel
- 6.: Weiteres Kabel
- 7.: Gehäuse
- 8.: Verbinderteil
- 9.: Crimpbereich
- 10.: Abdichtung
- 11.: Kontaktbereich
- 12.: Zugentlastungsbereich
- 13.: Vorsprung
- 14.: Kontaktträger
- 15.: Umspritzung
- 16.: Abwinklung
- 17.: Rasthaken
- 18.: Trennebene
- 19.: Rasthaken
- 20.: Anschlagfläche
- 21.: Umlaufende Ausnehmung

## Patentansprüche

1. Leitungssatz (1) mit einer Verbindungsstelle (2), geeignet und ausgebildet; um zumindest zwei elektrische Leiter (50, 60) miteinander zu verbinden und durch eine Trennebene (18) zu führen, wobei auf beiden Seiten der Trennebene (18) voneinander unterschiedliche Umgebungsbedingungen herrschen, wobei an einem Ende eines elektrischen Leiters (60) ein Verbinderteil (8) angeordnet und ein Kontaktträger (14) vorgesehen ist, der zumindest das eine Verbinderteil (8) aufnimmt, wobei der weitere elektrische Leiter (50) mit dem Verbinderteil (8) kontaktiert ist; **dadurch gekennzeichnet, dass** der Kontaktträger (14) mittels eines Dichtelementes dichtend in die Trennebene (18) eingesetzt ist, wobei der Kontaktträger (14) als Umspritzung ausgebildet ist und das Dichtelement fester Bestandteil des Kontaktträgers (14) ist, wobei der Kontaktträger (14) als erste Umspritzung (14) des Verbinderteiles (8) ausgebildet ist und das Dichtelement als zweite Umspritzung (15) fester Bestandteil des Kontaktträgers (14) ist.

2. Leitungssatz (1) mit einer Verbindungsstelle (2) nach Anspruch 1, **dadurch gekennzeichnet, dass** der Kontaktträger (14) dichtend in die Trennebene (18) eingesetzt ist.

3. Leitungssatz (1) mit einer Verbindungsstelle (2) nach Anspruch 1 oder 2, **dadurch gekennzeichnet, dass** der zumindest eine elektrische Leiter (60) dichtend in den Kontaktträger (14) eingesetzt ist.

4. Leitungssatz (1) mit einer Verbindungsstelle (2) nach Anspruch 1, 2 oder 3, **dadurch gekennzeichnet, dass** der Kontaktträger (14) als Umspritzung ausgebildet ist.

5. Leitungssatz (1) mit einer Verbindungsstelle (2) nach Anspruch 1, 2, 3 oder 4, **dadurch gekennzeichnet, dass** zumindest der Kontaktbereich, in dem der weitere elektrische Leiter (50) mit dem Verbinderteil (8) kontaktiert ist, mit der zweiten Umspritzung (15) versehen ist.

6. Leitungssatz (1) mit einer Verbindungsstelle (2) nach Anspruch 5, **dadurch gekennzeichnet, dass** die Umspritzung (15) zumindest einen Rasthaken (17), einen Verriegelungsclip oder dergleichen aufweist.

7. Leitungssatz (1) mit einer Verbindungsstelle (2) nach einem der vorhergehenden Ansprüche, **dadurch gekennzeichnet, dass** der Kontaktträger (14) zumindest einen Rasthaken (19) aufweist, mit dem er die Trennebene (18) zwecks seiner Festlegung hintergreift.

8. Leitungssatz (1) mit einer Verbindungsstelle (2) nach einem der vorhergehenden Ansprüche, **dadurch gekennzeichnet, dass** das Verbinderteil (8) einen Vorsprung (13) zwecks seiner Festlegung an dem Kontaktträger (14) aufweist.

## Claims

1. Line set (1) with a connection point (2), which is suitable and designed for interconnecting, and leading through a separating plane (18), at least two electrical conductors (50, 60), wherein mutually different ambient conditions prevail on both sides of the separating plane (18), wherein, at one end of an electrical conductor (60), a connector part (8) is arranged and a contact carrier (14), which receives at least the one connector part (8), is provided, wherein the further electrical conductor (50) is contacted with the connector part (8), **characterized in that** the contact carrier (14) is inserted sealingly into the separating plane (18) by means of a sealing element, wherein the contact carrier (14) is designed in the form of an encapsulation and the sealing element is a fixed constituent part of the contact carrier (14), wherein the contact carrier (14) is designed in the form of a first encapsulation (14) of the connector part (8) and the sealing element is, as a second encapsulation (15), a fixed constituent part of the contact carrier (14).

2. Line set (1) with a connection point (2) according to Claim 1, **characterized in that** the contact carrier (14) is inserted sealingly into the separating plane (18).

3. Line set (1) with a connection point (2) according to Claim 1 or 2, **characterized in that** the at least one electrical conductor (60) is inserted sealingly into the contact carrier (14).

4. Line set (1) with a connection point (2) according to Claim 1, 2 or 3, **characterized in that** the contact carrier (14) is designed in the form of an encapsulation.

5. Line set (1) with a connection point (2) according to Claim 1, 2, 3 or 4, **characterized in that** at least the contact region in which the further electrical conductor (50) is contacted with the connector part (8) is provided with the second encapsulation (15).

6. Line set (1) with a connection point (2) according to Claim 5, **characterized in that** the encapsulation (15) has at least one detent hook (17), one locking clip or the like.

7. Line set (1) with a connection point (2) according to one of the preceding claims, **characterized in that** the contact carrier (14) has at least one detent hook (19), by way of which said carrier, for the purpose of the fixing thereof, engages behind the separating plane (18).

8. Line set (1) with a connection point (2) according to one of the preceding claims, **characterized in that** the connector part (8), for the purpose of the fixing thereof to the contact carrier (14), has a projection (13).

## Revendications

1. Jeu (1) de conducteurs présentant un emplacement de liaison (2) configuré pour convenir à relier l'un à l'autre au moins deux conducteurs électriques (50, 60) et les guider à travers un plan de séparation (18), des conditions ambiantes différentes régnant de part et d'autre du plan de séparation (18), une pièce de liaison (8) étant disposée à une extrémité d'un conducteur électrique (60) et un porte-contact (14) qui loge la ou les pièces de liaison (8) étant prévu, l'autre conducteur électrique (50) étant en contact avec la pièce de liaison (8),
**caractérisé en ce que**
le porte-contact (14) est inséré hermétiquement dans le plan de séparation (18) grâce à un élément d'étanchéité, le porte-contact (14) étant configuré comme encapsulation et l'élément d'étanchéité constituant un composant fixe du porte-contact (14), le porte-contact (14) étant configuré comme première encapsulation (14) de la pièce de liaison (8) et l'élément d'étanchéité servant de deuxième encapsulation (15) faisant partie intégrante du porte-contact (14).

2. Jeu (1) de conducteurs présentant un emplacement de liaison (2) selon la revendication 1, **caractérisé en ce que** le porte-contact (14) est inséré hermétiquement dans le plan de séparation (18).

3. Jeu (1) de conducteurs présentant un emplacement de liaison (2) selon les revendications 1 ou 2, **caractérisé en ce que** le ou les conducteurs électriques (60) sont insérés hermétiquement dans le porte-contact (14) .

4. Jeu (1) de conducteurs présentant un emplacement de liaison (2) selon les revendications 1, 2 ou 3, **caractérisé en ce que** le porte-contact (14) est configuré comme encapsulation.

5. Jeu (1) de conducteurs présentant un emplacement de liaison (2) selon les revendications 1, 2, 3 ou 4, **caractérisé en ce qu'**au moins la partie de contact dans laquelle l'autre conducteur électrique (50) est en contact avec la pièce de liaison (8) est doté de la deuxième encapsulation (15).

6. Jeu (1) de conducteurs présentant un emplacement de liaison (2) selon la revendication 5, **caractérisé en ce que** l'encapsulation (15) présente au moins un crochet d'encliquetage (17), une pince de verrouillage ou similaires.

7. Jeu (1) de conducteurs présentant un emplacement de liaison (2) selon l'une des revendications précédentes, **caractérisé en ce que** le porte-contact (14) présente au moins un crochet d'encliquetage (19) par lequel il accroche le plan de séparation (18) par l'arrière en vue de son immobilisation.

8. Jeu (1) de conducteurs présentant un emplacement de liaison (2) selon l'une des revendications précédentes, **caractérisé en ce que** la pièce de liaison (8) présente une saillie (13) en vue de son immobilisation sur le porte-contact (14).
